# EUROPÄISCHE PATENTSCHRIFT

(11) **EP 1 178 919 B1**
(45) Veröffentlichungstag und Bekanntmachung des Hinweises auf die Patenterteilung: **05.03.2003**
(21) Anmeldenummer: 00947756.3
(22) Anmeldetag: 17.05.2000
(51) Int. Cl.: B62D 25/12, B60R 21/34

(54) **FRONTHAUBENANORDNUNG**
FRONT HOOD ASSEMBLY
ENSEMBLE CAPOT AVANT

(30) Priorität: 17.05.1999 DE 19922459
(43) Veröffentlichungstag der Anmeldung: 13.02.2002
(73) Patentinhaber: Edscha AG, 42855 Remscheid (DE)
(72) Erfinder: POLZ, Andreas, D-45881 Gelsenkirchen (DE); SCHLEGEL, Peter, D-42327 Wuppertal (DE); SCHNEPPENHEIM, Jörg, D-82110 Germering (DE)
(74) Vertreter: Sparing, Rolf Klaus
(86) Internationale Anmeldenummer: DE0001601
(87) Internationale Veröffentlichungsnummer: WO00069707

(56) Entgegenhaltungen:
- EP-A- 0 914 992
- EP-A- 0 926 018
- PATENT ABSTRACTS OF JAPAN vol. 1998, no. 12, 31. Oktober 1998 (1998-10-31) & JP 10 194158 A (NISSAN MOTOR CO LTD), 28. Juli 1998 (1998-07-28)

## Beschreibung

Die Erfindung betrifft eine Fronthaubenanordnung nach dem Oberbegriff des Anspruchs 1. Die Erfindung betrifft ferner ein Verfahren nach dem Oberbegriff des Anspruchs 12.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der Aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893, die auch die Merkmale der Oberbegriffe der Ansprüche 1 und 12 zeigt, schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen. Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Scharnierträgers zuläßt, weshalb der beschriebene Scharnierträger beispielsweise blockiert.

EP-A-0 914 992 zeigt eine Fronthaube, die permanent in einer abgesenkten Lage liegt und bei einem Aufprall dann angehoben wird, wenn das Fahrzeug sich mit einer entsprechenden Geschwindigkeit bewegt. Hierzu ist eine Kollisionsdetektionseinheit vorgesehen, ferner eine Kollisionsbeurteilungseinheit, um ein Zündsignal zum Betätigen einer Fronthaubenanhebeeinheit abzugeben. Das Abheben der Fronthaube ist einmalig für den Fall eines Zusammenpralls, ein Absenken der Fronthaube ist überhaupt nicht vorgesehen.

EP-A-0 926 018, die nach dem Prioritätstag der vorliegenden Anmeldung veröffentlicht wurde, beschreibt eine Fronthaube, die permanent in einer abgesenkten Lage liegt und bei einem Aufprall dann ausgefahren wird, wenn das Fahrzeug sich mit einer entsprechenden Geschwindigkeit bewegt.

WO-A-97 18 108 beschreibt eine Fronthaubenanordnung, bei der über einen Stoßsensor ein Fußgängeraufprall detektiert wird und Aufpralldämpfungsmittel in Gestalt eines Luftsacks dann ausgelöst werden, wenn während des Aufpralls die Fahrzeuggeschwindigkeit sich innerhalb einer vorbestimmten Spanne bewegt. Problematisch bei einer derartigen Anordnung ist jedoch das Vorsehen eines Airbags im Außenbereich der Motorhaube, da sie dort äußeren Einflüssen, auch Wettereinflüssen wie Sonneneinstrahlung, Nässe und Frost ausgesetzt ist, und daher ein Funktionieren über die Lebensdauer eines Kraftwagens nicht gewährleistet ist, sowie die knappe Reaktionszeit.

JP-A-10 258 774 oder JP-A-09 315 266 betreffen Fronthaubenanordnungen, bei denen die Fronthaube aufgrund des Detektierens eines Fußgängeraufpralls angehoben wird, und ansonsten in einer abgesenkten Stellung beibehalten ist. Problematisch bei dieser Lösung ist insbesondere, daß die Reaktionszeiten, die zwischen einem Aufprall und seiner Erkennung sowie der Verarbeitung der Befehle zum Auslösen der Einrichtung zum Anheben der Fronthaube verstreicht, in der Regel zu lang ist, um ein rechtzeitiges Betätigen der Fronthaube sicherzustellen. Darüber hinaus wird die Fronthaube auch dann ausgefahren, wenn beispielsweise beim Einparken die Stoßdetektoren ansprechen oder wenn bei hoher Geschwindigkeit ein Hindernis angefahren wird.

JP-A-10 194 158 beschreibt eine komplexe und kostenaufwendige Gestaltung einer Fronthaubenanordnung, bei der die Fronthaube dann angehoben wird, wenn ein Zusammenstoß festgestellt wird, wozu in der Frontpartie des Fahrzeugs ein Sensor vorgesehen ist, der über eine Steuerung ausgelesen wird, welche auch eine Kolbenzylindereinheit betätigt, um die Fronthaube anzuheben. Die Betätigungseinrichtung wird lediglich dann ausgefahren, wenn ein derartiger Aufprall festgestellt wird. Hierbei wird zugleich auf der Grundlage der Fahrzeuggeschwindigkeit und -beschleunigung ermittelt, ob eine Kollision mit einem Gegenstand vorliegt Insoweit ist davon auszugeben, daß die Berücksichtigung der Fahrzeuggeschwindigkeit lediglich zur Feststelllung, ob ein Zusammenprall vorliegt, herangezogen wird und nicht zugleich eine Geschwindigkeitsspanne das Anheben der Fronthaube begrenzt Hierbei ist zu beachten, daß zum Sicherstellen einer Fußgängeraufpralffunktion die Fronthaube, wenn man das Anheben der Fronthaube auf eine Aufprallsituation beschränken will, innerhalb weniger als einer Sekunde, vorzugsweise weniger als einer halben Sekunde ansprechen muß. Zwar gibt es inzwischen hochleistungsfähige Rechner, gleichwohl ist nicht sichergestellt, daß die Fronthaube vollständig hochgefahren ist, bevor der Kopf eines Fußgängers aufprallt. Dies insbesondere dann, wenn der Aufprall in einem Eckbereich erfolgt und dadurch aufgrund des unterschiedlichen Widerstands auf beiden Betätigungseinrichtungen ein Verkanten möglich ist, so daß ein vollständiges Hochfahren der Fronthaube behindert wird.

Insgesamt ist noch keine Lösung vorgeschlagen worden, die eine kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 bzw. ein Verfahren nach dem Oberbegriff des Anspruchs 12 vorzuschlagen, die eine kostenmäßig und technisch realisierbaren Fußgängerschutz liefert.

Diese Aufgabe wird bei der eingangs genannten Fronthaubenanordnung erfindungsgemäß mit den kennzeichnenden Merkmalen des Anspruchs 1 gelöst.

Aufgabe wird beidem eingangs genannten Verfahren erfindungsgemäß mit den kennzeichnenden Merkmalen des Anspruchs 12 gelöst.

Die erfindungsgemäße Anordnung ermöglicht es, daß die Fronthaube in denjenigen Geschwindigkeitsbereichen angehoben werden kann, in denen der Aufprall eines Fußgängers besonders gefährlich ist. Dagegen während des Stillstandes des Fahrzeugs oder bei langsamen Geschwindigkeiten wie beim Einparken, bei denen die Sicht besonders wichtig ist und bei hohen Geschwindigkeiten, bei denen die Aerodynamik der Fronthaube eine große Rolle spielt, ist die Haube in einer abgesenkten Position, weil in beiden Fällen der Aufprall eines Fußgängers nicht zum Aufschlagen seines Kopfes auf der Fronthaube führen würde. Hierzu greift zweckmäßigerweise die die Verlagerung bewirkende Einheit, die vorzugsweise eine Linearbewegung ausführt, unmittelbar an dem Gelenk, daß den Drehpunkt der Haubenlagerung bildet, an, so daß eine Verschwenkung der Fronthaube um das Haubenschloß in einem entsprechenden Radius sichergestellt ist.

Insbesondere ist es möglich, die Betätigungseinrichtung als langsam ein- und ausfahrbare Kolben-Zylinder-Einheit auszugestalten, während bei einem System, das ausgelöst werden muß, eine Hochgeschwindigkeitseinrichtung vorgesehen sein muß. Dies ist in der Regel nur mittels Treibladung oder dergleichen als Einmaleinrichtung ausbildbar und erfordert bei jedem Fehlalarm aufwendige Umrüstungen. Demgegenüber ermöglicht das erfindungsgemäße Verfahren bzw. die erfindungsgemäße Fronthaubenanordnung eine weitere Benutzung des Kraftwagens ohne Beeinträchtigung, wenn es zum Beispiel bei Einparken zu einer Berührung der Stoßstange kommt.

Vorzugsweise wird die Fronthaube bei Geschwindigkeiten von über 10 km/h angehoben und bei Geschwindigkeiten von über 50 km/h wieder in ihre Ausgangsposition abgesenkt; während das Anheben wiederum bei Unterschreiten einer Geschwindigkeit von 45 km/h erfolgt und bei Unterschreiten einer Geschwindigkeit von 5 km/h die Fronthaube wieder abgesenkt wird. Es ist auch möglich, daß das Absenken der Fronthaube erst nach Stillstand des Kraftfahrzeugs vorzusehen, um im Stadtverkehr ein häufiges Hoch- und Herunterfahren zu verhindern. Außerdem kann eine Verzögerungsschaltung vorgesehen sein, bei der das Herunterfahren der Fronthaube erst bei einem Stillstand von mehr als einem einstellbaren Schwellenwert von beispielsweise 5 Sekunden ausgelöst wird.

Für die Verlagerung des Gelenkes ist vorzugsweise an jeder Seite des Fahrzeuglängsträgers eine Kolben- Zylinder- Einheit angeordnet, dessen kolbenseitiges Ende das Gelenk trägt und dessen Zylinder jeweils fest mit einem der Längsträger verbunden ist. Vorzugsweise handelt es sich um eine pneumatisch angetriebene Kolben- Zylinder- Einheit, die ähnlich wie eine Gasfeder kompressibel ist und somit bei Aufprall eines Fußgängers selbst auch Aufprallenergie in Kompression umwandeln kann und somit zur Herabminderung der Folgen des Aufpralls, insbesondere der Kopfpartie eines Fußgängers, beiträgt. Die Versorgung der pneumatischen Kolben- Zylinder-Einheit kann zweckmäßig über andere Aggregate im Fahrzeug, die ebenfalls Unterdruck benötigen beziehungsweise erzeugen, ohne große Kosten erfolgen. Vorzugsweise ist die Ansteuereinheit der Kolben- Zylinder- Einheit umschaltbar, um beide Kolbenseiten beaufschlagen beziehungsweise entleeren zu können und entsprechend die Verlagerungsgeschwindigkeit der Kolben- Zylinder-Einheit zu erhöhen. Ferner können die Federpakete zur Unterstützung der Kolben- Zylinder- Einheit vorgesehen sein.

Die Geschwindigkeitsmessung erfolgt über einen Geschwindigkeitssensor und wird über elektronische Befehle, beispielsweise in einer Datenbusleitung, von einer zentralen Steuerung den Hubmitteln, beispielsweise der pneumatischen Kolben- Zylinder- Einheit, mitgeteilt. In Reaktion auf das Überschreiten beziehungsweise das Unterschreiten der voreingestellten Schwellenwerte wird die Verlagerung des Gelenks ausgelöst. Es ist möglich, zusätzlich bei höheren Geschwindigkeiten das Hubglied zu verriegeln, um die Steifigkeit des Fahrzeugs bei einem Frontalzusammenstoß mit einem anderen Fahrzeug zu erhöhen.

Zweckmäßigerweise wird neben den beiden Hubeinheiten für die Gelenke der Fronthaube an deren Frontseite eine weitere Hubeinheit dem Haubenschtoß zugeordnet sein, welche auch im Bereich des Haubenschlosses eine möglicherweise nicht so starke, aber dennoch spürbare Anhebung der Fronthaube bewirkt. Dies ist besonders dann zweckmäßig, wenn das Haubenschloß im Bereich der A-Holme des Fahrzeugs beziehungsweise im Bereich der Windschutzscheibe angeordnet ist, da eine starke Anhebung von frontseitigen Gelenken den Aufprall des menschlichen Kopfes in der Nähe der Windschutzscheibe nur geringfügig abfedern würde. Zweckmäßigerweise wird aber die Fronthaubenanordnung mit an der Rückseite der Fronthaube angeordneten Gelenken und an der Vorderseite der Fronthaube angeordnetem Haubenschloß versehen sein, so daß die Verschwenkung der Fronthaube im Wesentlichen entgegengesetzt der vermeintlichen Aufpralls des Kopfes eines erfaßten Fußgängers erfolgt.

Weitere Vorteile und Merkmale der Erfindung ergeben sich aus der nachfolgenden Beschreibung und aus den abhängigen Ansprüchen.

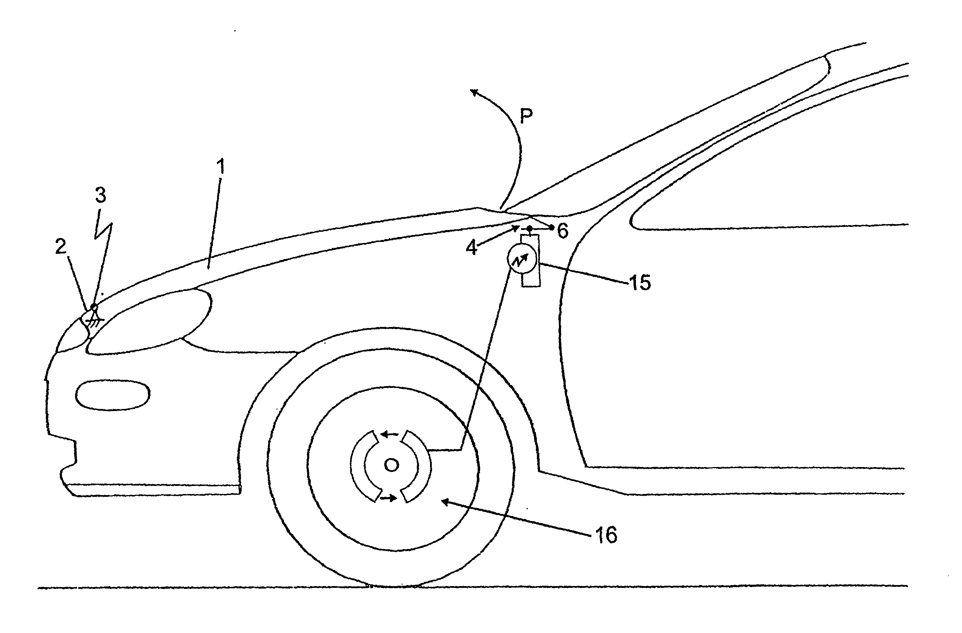

Die Erfindung wird im Folgenden anhand eines Ausführungsbeispiels unter Bezugnahme auf die Zeichnung näher erläutert.

Die einzige Figur zeigt schematisch die Frontpartie eines Kraftfahrzeuges mit einer erfindungsgemäßen Fronthaubenanordnung.

Wie in der Figur zu sehen, ist die Fronthaube 1 an ihrer Vorderseite 2 mit einem Haubenschloß 3 verriegelt, während zwei in den Ecken der Hinterseite der Fronthaube 1 angeordnete Scharniere 4 die Verschwenkung um eine im Wesentlichen horizontale und senkrecht zur Fahrrichtung verlaufende Achse eines Gelenkes 6 zulassen. An das Gelenke 6 greift das kolbenseitige Ende einer Kolben-Zylinder-Einheit 15 an, welche in Reaktion auf die Geschwindigkeit des Fahrzeugs aus- beziehungsweise eingefahren werden kann. Alternativ kommen auch andere Hubmotoren in Betracht. Hierbei bewirkt die drehbare Anlenkung des Gelenks 6, daß das Haubenschloß 3 eine Schwenkachse für das Anheben der Fronthaube 1 in Richtung des Pfeils P bewirkt.

Die Geschwindigkeit des Fahrzeugs wird beispielsweise mit einem Sensor auf der Vorderachse 16 gemessen, wobei derartige Meßeinrichtungen bekannt sind und zumeist auch die Geschwindigkeitsanzeige im Fahrzeug mit entsprechenden Informationen speisen. Eine Steuerung der Kolben-Zylinder-Einheit 15 reagiert auf die Geschwindigkeit beziehungsweise die Geschwindigkeitsänderungen und sorgt bei Überschreiten einer Geschwindigkeit von beispielsweise 10 oder 15 km/h für ein Anheben der Fronthaube 1, während bei Überschreiten einer Geschwindigkeit von beispielsweise 55 km/h, die aber auch an die innerorts geltende Geschwindigkeitsbegrenzung, gegebenenfalls zuzüglich eines Toleranzzuschlags, angepaßt sein kann, die Fronthaube 1 wieder abgesenkt wird. Das erneute Anheben der Fronthaube 1 erfolgt bei einem Unterschreiten einer Geschwindigkeit von beispielsweise 40 km/h, wobei zusätzlich bei starker Bremsverzögerung des Fahrzeugs ebenfalls eine Auslösung vorgesehen werden kann. Bei Stillstand des Fahrzeugs oder bei geringer Fahrt von beispielsweise 5 km/h, bei der der Aufprall eines Fußgängers keine tödlichen Folgen haben muß, wird die Fronthaube 1 wieder abgesenkt, um die Übersicht des Fahrers wieder zu vergrößern. Eine elektronische Halteschaltung verhindert, daß ein ständiges Herauf- und Herunterfahren der Fronthaube 1 beispielsweise im Stadtverkehr erfolgt dadurch, daß beispielsweise erst ein Zeitraum von 5 oder 10 Sekunden verstrichen sein muß, in dem die Absenkebedingungen der Fronthaube 1 erfüllt ist, bevor die Absenkung der Fronthaube ausgelöst wird. Hierdurch wird zwar die Dauer, in der möglicherweise die Sicht des Fahrers eingeschränkt ist, verlängert, aber gleichzeitig wird ein häufiges Aus- und Einfahren der Fronthaube, das den Fahrer irritieren könnte, verhindert.

Es ist möglich, die erfindungsgemäße Fronthaubenanordnung derart weiterzubilden, daß neben den Geschwindigkeitsdaten auch die Beschleunigungsdaten bei der von der Halteschaltung vorgegebenen Dauer berücksichtigt werden, das heißt, daß bei plötzlichem Abbremsen auch bei höherer Geschwindigkeit ein Ausfahren der Fronthaube 1 erfolgt, oder daß bei plötzlichem Beschleunigen die Fronthaube eingefahren wird.

Die Erfindung ist vorstehend in einem Ausführungsbeispiel erläutert worden, in dem das kolbenseitige Ende der Kolben- Zylinder- Einheit 14 der unmittelbar an dem Gelenk 6 angreift, das zugleich die Schwenkachse beim Aufklappen der Fronthaube 1 für den Zugang zum Motorbereich definiert. Es ist alternativ möglich, diese Koppelung über ein Zwischenglied vorzunehmen, welches selbst in besonderer Weise dazu ausgebildet ist, im Falle des Aufpralls eines menschlichen Körpers deformiert zu werden und das im eingezogenen Zustand der Fronthaube 1 derart geführt beziehungsweise gelagert ist, daß die axiale Festigkeit des Fahrzeugs, die für das Crash-Verhalten bedeutsam ist, nicht beeinträchtigt wird.

## Patentansprüche

1. Fronthaubenanordnung, bei der eine Fronthaube (1) eines Fahrzeugs über ein Scharnier (4) an den Rahmen eines Fahrzeuges angelenkt ist, welche Fronthaube (1) ferner über wenigstens ein Haubenschloß (3) verschließbar ist,
**dadurch gekennzeichnet,**
**daß** das Scharnier (4) Mittel zum Verlagern eines Gelenks (6) in Abhängigkeit von der Geschwindigkeit des Fahrzeugs in eine obere beziehungsweise in eine untere Position, unabhängig von einem Fußgängeraufprall, aufweist.

2. Fronthaubenanordnung nach Anspruch 1, **dadurch gekennzeichnet, daß** die Mittel zum Verlagern einen linearen Hubantrieb umfassen, der gelenkig an dem Gelenk (6) angreift.

3. Fronthaubenanordnung nach Anspruch 1 oder 2, **dadurch gekennzeichnet, daß** die Hubmittel als Kolben-Zylinder-Einheit ausgebildet sind.

4. Fronthaubenanordnung nach Anspruch 3, **dadurch gekennzeichnet, daß** die Kolben-Zylinder-Einheit pneumatisch betätigbar ist.

5. Fronthaubenanordung nach Anspruch 3 oder 4, **dadurch gekennzeichnet, daß** die Kolben- Zylinder- Einheit zur Ausführung einer Linearbewegung umschaltbar ist.

6. Fronthaubenanordnung nach einem der Ansprüche 1 bis 5, **dadurch gekennzeichnet, daß** die Mittel zum Verlagern der Fronthaube (1) in Reaktion auf Signale einer Steuerung betätigt werden.

7. Fronthaubenanordnung nach einem der Ansprüche 1 bis 6, **dadurch gekennzeichnet, daß** ferner Mittel zum Verlagern des Haubenschloßes (3) in eine angehobene Position vorgesehen sind, die in Abstimmung mit der Verlagerung der Scharniere (4) betätigbar sind.

8. Fronthaubenanordnung nach einem der Ansprüche 1 bis 7, **dadurch gekennzeichnet, daß** die Verlagerung bei Überschreiten eines unteren Schwellenwertes ausgelöst und bei Überschreiten eines darüber liegenden oberen Schwellenwertes wieder zurückgeführt wird, wobei die Schwellenwerte Geschwindigkeiten des Fahrzeugs sind.

9. Fronthaubenanordnung nach einem der Ansprüche 1 bis 8, **dadurch gekennzeichnet, daß** die Mittel zum Verlagern bei Unterschreiten eines Schwellenwertes ausgelöst werden, und bei Erreichen eines zweiten Schwellenwertes die Mittel zum Verlagern wieder zurückgeführt werden.

10. Fronthaubenanordnung nach Anspruch 8 oder 9, **dadurch gekennzeichnet, daß** vor dem Rückführen der Mittel zum Verlagern ein Mindestzeitraum vorgesehen ist.

11. Fronthaubenanordnung nach einem der Ansprüche 1 bis 10, **dadurch gekennzeichnet, daß** die Scharniere (4) achterlich und das wenigstens eine Haubenschloß (3) in der Frontpartie der Fronthaube (1) angeordnet sind.

12. Verfahren zum Betätigen der Fronthaube (1) eines Fahrzeugs in Abhängigkeit von der Fahrzeuggeschwindigkeit,
**dadurch gekennzeichnet,**
**daß** die Fronthaube, unabhängig von einem Fußgängeraufprall, wenigstens im Bereich ihrer Scharniere (4) bei Überschreiten eines unteren Schwellenwertes und bei Unterschreiten eines oberen Schwellenwertes für die Geschwindigkeit in eine angehobene Position verlagert wird.

13. Verfahren nach Anspruch 12, **dadurch gekennzeichnet, daß** die Fronthaube (1) ferner im Bereich eines Haubenschloßes (3) in eine angehobene Position verlagert wird.

14. Verfahren nach Anspruch 12 oder 13, **dadurch gekennzeichnet, daß** die Verlagerung durch Ansteuerung von pneumatischen Kolben-Zylinder-Einheiten (15) erfolgt.

15. Verfahren nach einem der Ansprüche 12 bis 14, **dadurch gekennzeichnet, daß** die Verlagerung der Fronthaube ausgelöst wird, nachdem die Schwellenwerte während eines Mindestzeitraums überschritten wurden.

## Claims

1. A front-hood arrangement, wherein a front hood (1) of a vehicle is coupled via a hinge (4) to the frame of a vehicle, which front hood (1) can also be closed by means of at least one hood lock (3),
**characterized in**
**that** the hinge (4) has means for displacing a joint (6), as a function of the speed of the vehicle, into an upper or a lower position, independently of an impact of a pedestrian.

2. The front-hood arrangement as claimed in claim 1, **characterized in that** the displacement means comprise a linear lifting drive which acts in an articulated manner on the joint (6).

3. The front-hood arrangement as claimed in claim 1 or 2, **characterized in that** the lifting means are designed as a piston-cylinder unit.

4. The front-hood arrangement as claimed in claim 3, **characterized in that** the piston-cylinder unit is pneumatically actuatable.

5. The front-hood arrangement as claimed in claim 3 or 4, **characterized in that** the piston-cylinder unit can be switched over to execute a linear movement.

6. The front-hood arrangement as claimed in one of claims 1 to 5, **characterized in that** the means for displacing the front hood (1) are actuated in response to signals from a control unit.

7. The front-hood arrangement as claimed in one of claims 1 to 6, **characterized in that** means for displacing the hood lock (3) into a raised position are also provided, and these means can be actuated in accordance with the displacement of the hinges (4).

8. The front-hood arrangement as claimed in one of claims 1 to 7, **characterized in that** the displacement is triggered in the event of a lower threshold being exceeded, and is returned again in the event of an upper threshold, which is higher than the lower threshold, being exceeded, the thresholds being speeds of the vehicle.

9. The front-hood arrangement as claimed in one of claims 1 to 8, **characterized in that** the displacement means are triggered in the event of a threshold being undershot, and the displacement means are returned again in the event of a second threshold being reached.

10. The front-hood arrangement as claimed in claim 8 or 9, **characterized in that** a minimum time is provided prior to the return movement of the displacement means.

11. The front-hood arrangement as claimed in one of claims 1 to 10, **characterized in that** the hinges (4) are arranged at the rear and the at least one hood lock (3) is arranged in the front part of the front hood (1).

12. A method for actuating the front hood (1) of a vehicle as a function of the vehicle speed,
**characterized in**
**that** the front hood, independently of an impact of a pedestrian, at least in the region of its hinges (4), is displaced into a raised position in the event of exceeding a lower threshold and in the event of undershooting an upper threshold for the speed.

13. The method as claimed in claim 12, **characterized in that** the front hood (1) is also displaced into a raised position in the region of a hood lock (3).

14. The method as claimed in claim 12 or 13, **characterized in that** the displacement takes place by activation of pneumatic piston-cylinder units (15).

15. The method as claimed in one of claims 12 to 14, **characterized in that** the displacement of the front hood is triggered after the thresholds have been exceeded for a minimum time.

## Revendications

1. Ensemble de capot avant dans lequel un capot avant (1) d'un véhicule est articulé au moyen d'une charnière (4) sur le châssis d'un véhicule, lequel capot avant (1) peut en outre être verrouillé au moyen d'au moins une serrure de capot (3),
**caractérisé en ce**
**que** la charnière (4) comporte des moyens de déplacement d'une articulation (6) en fonction de la vitesse du véhicule dans une position supérieure, respectivement inférieure, indépendamment d'une collision avec un piéton.

2. Ensemble de capot avant selon la revendication 1, **caractérisé en ce que** les moyens de déplacement comportent un mécanisme de levage linéaire qui s'engage de façon articulée avec l'articulation (6).

3. Ensemble de capot avant selon la revendication 1 ou 2, **caractérisé en ce que** les moyens de levage se présentent sous la forme d'une unité à cylindre et piston.

4. Ensemble de capot avant selon la revendication 3, **caractérisé en ce que** l'unité à cylindre et piston peut être actionnée par des moyens pneumatiques.

5. Ensemble de capot avant selon la revendication 3 ou 4, **caractérisé en ce que** l'unité à cylindre et piston peut être inversée pour réaliser un déplacement linéaire.

6. Ensemble de capot avant selon l'une des revendications 1 à 5, **caractérisé en ce que** les moyens de déplacement du capot avant (1) sont actionnés en réponse à des signaux d'une commande.

7. Ensemble de capot avant selon l'une des revendications 1 à 6, **caractérisé en ce que** des moyens de déplacement de la serrure de capot (3) sont en outre prévus dans une position soulevée, lesquels moyens peuvent être actionnés conformément au déplacement de la charnière (4).

8. Ensemble de capot avant selon l'une des revendications 1 à 7, **caractérisé en ce que** les moyens de déplacement sont déclenchés lors du dépassement d'une valeur de seuil inférieure et sont ramenés lors du dépassement d'une valeur de seuil supérieure, les valeurs de seuil étant des vitesses du véhicule.

9. Ensemble de capot avant selon l'une des revendications 1 à 8, **caractérisé en ce que** les moyens de déplacement sont déclenchés en cas de dépassement d'une valeur de seuil, et les moyens de déplacement sont ramenés lorsqu'une seconde valeur de seuil est atteinte.

10. Ensemble de capot avant selon la revendication 8 ou 9, **caractérisé en ce qu'**il est prévu un intervalle de temps minimal avant le retour des moyens de déplacement.

11. Ensemble de capot avant selon l'une des revendications 1 à 10, **caractérisé en ce que** la charnière (4) est agencée en arrière et l'au moins une serrure de capot (3) est agencée dans la partie avant du capot avant (1).

12. Procédé d'actionnement du capot avant (1) d'un véhicule en fonction de la vitesse du véhicule, **caractérisé en ce que** le capot avant est déplacé dans une position soulevée, indépendamment d'une collision avec un piéton, au moins dans la région de sa charnière (4) en cas de dépassement d'une valeur de seuil inférieure et en cas de dépassement d'une valeur de seuil supérieure pour la vitesse.

13. Procédé selon la revendication 12, **caractérisé en ce que** le capot avant (1) est en outre déplacé dans une position soulevée dans la région d'une serrure de capot (3).

14. Procédé selon la revendication 12 ou 13, **caractérisé en ce que** le déplacement est effectué en commandant des unités pneumatiques à cylindre et piston (15).

15. Procédé selon l'une des revendications 12 à 14, **caractérisé en ce que** le déplacement du capot avant est déclenché après que les valeurs de seuil ont été dépassées pendant un intervalle de temps minimal.
